# EUROPÄISCHE PATENTSCHRIFT

(11) **EP 2 907 120 B1**
(45) Veröffentlichungstag und Bekanntmachung des Hinweises auf die Patenterteilung: **17.03.2021**
(21) Anmeldenummer: 13771129.7
(22) Anmeldetag: 30.09.2013
(51) Int. Cl.: G06K 9/00, G06K 9/62

(54) **SCHÄTZUNG DES STRASSENTYPS MITHILFE VON SENSORBASIERTEN UMFELDDATEN**
ESTIMATING A STREET TYPE USING SENSOR-BASED SURROUNDINGS DATA
ESTIMATION DU TYPE DE ROUTE AU MOYEN DE DONNÉES D'ENVIRONNEMENT BASÉES SUR DES CAPTEURS

(30) Priorität: 09.10.2012 DE 102012218362
(43) Veröffentlichungstag der Anmeldung: 19.08.2015
(73) Patentinhaber: Bayerische Motoren Werke Aktiengesellschaft, 80809 München (DE)
(72) Erfinder: NAGY, Istvan, 82178 Puchheim (DE)
(86) Internationale Anmeldenummer: PCT/EP2013/070314
(87) Internationale Veröffentlichungsnummer: WO 2014/056746

(56) Entgegenhaltungen:
- DE-A1-102005 052 175
- DE-A1-102011 005 844
- KENSUKE HAYASHI ET AL: "Road type estimation by wavelet analysis of running tire sound", WAVELET ANALYSIS AND PATTERN RECOGNITION, 2008. ICWAPR '08. INTERNATIONAL CONFERENCE ON, IEEE, PISCATAWAY, NJ, USA, 30. August 2008 (2008-08-30), Seiten 650-653, XP031329390, ISBN: 978-1-4244-2238-8
- AMDITIS A ET AL: "A Situation-Adaptive Lane-Keeping Support System: Overview of the SAFELANE Approach", IEEE TRANSACTIONS ON INTELLIGENT TRANSPORTATION SYSTEMS, IEEE, PISCATAWAY, NJ, USA, Bd. 11, Nr. 3, 1. September 2010 (2010-09-01), Seiten 617-629, XP011312584, ISSN: 1524-9050, DOI: 10.1109/TITS.2010.2051667

## Beschreibung

Die Erfindung betrifft ein Verfahren zum Schätzen eines Straßentyps sowie eine zu diesem Zweck eingerichtete Vorrichtung.

Heutzutage ist es wohlbekannt mithilfe eines Navigationssystems den Straßentyp zu bestimmen, auf dem sich ein Fahrzeug befindet. Dazu wird mithilfe eines satellitengestützten Positionierungssystems die Position des Fahrzeugs bestimmt und mithilfe einer gespeicherten digitalen Karte, in der zu den Straßen auch deren Typ gespeichert ist, der Straßentyp bestimmt. Straßentypen sind beispielsweise Innerorts, Landstraße und Autobahn.

Allerdings wird zur Erkennung des Straßentyps das Navigationssystem benötigt. Häufig ist ein solches auch in modernen Fahrzeugen aus Kostengründen noch nicht vorhanden.

In der DE 196 06 259 C1 wird ein Verfahren zur Erkennung eines Straßentyps ohne mitgeführte digitale Straßenkarte offenbart. Das Erkennungsprinzip beruht darauf, dass sich bestimmte Straßentypen mit einer gewissen Wahrscheinlichkeit durch charakteristische geometrische Merkmale unterscheiden lassen. Gemäß dem dort offenbarten Verfahren wird abschnittsweise der Fahrverlauf geometrisch erfasst und über Mustererkennung mit charakteristischen Fahrverläufen zu verglichen.

Die Publikation Kensuke Hayashi et al, "Road type estimation by wavelet analysis of running tire sound", IEEE Int Conf on Wavelet Analysis and Pattern Recognition ICWAPR '08, 30. August 2008, Seiten 650 bis 653 offenbart die Schätzung des Straßentyps mittels des Reifenrollgeräusches. Das Geräusch wird mittels eines Mikrofons aufgenommen, das im Reifeninneren angeordnet ist. Mitthilfe von Wavelet Transformierung werden charakteristische Frequenzen für jede Straßenbedingung in Tests ermittelt. Die Schätzung des Straßentyps wird dann basierend auf den ermittelten charakteristischen Frequenzen ausgeführt.

Die vorliegende Aufgabe an den Fachmann ist die Bereitstellung eines verbesserten Verfahrens zum Schätzen eines Straßentyps und die Bereitstellung einer entsprechenden Vorrichtung.

Die Aufgabe wird durch ein Verfahren nach Anspruch 1, eine Vorrichtung nach Anspruch 7 und ein Kraftfahrzeug nach Anspruch 8 gelöst. Vorteilhafte Weiterbildungen sind in den abhängigen Ansprüchen definiert.

In einem Aspekt umfasst ein Verfahren zum Schätzen eines Straßentyps, das durch eine elektronische Rechenvorrichtung ausgeführt wird: Empfangen von auf einer Sensormessung basierenden Umfelddaten; Schätzen des Straßentyps mithilfe eines Entscheidungsbaumes basierend auf den Umfelddaten; Schätzen des Straßentyps mithilfe eines Zustandsautomaten basierend auf den Umfelddaten; Bilden einer Gesamtschätzung des Straßentyps basierend auf der Schätzung mithilfe des Entscheidungsbaumes und der Schätzung mithilfe des Zustandsautomaten.

Durch die Verwendung und Kombination von zwei verschiedenen Schätzverfahren kann die Genauigkeit der Schätzung des Straßentyps verbessert werden. Dabei hat sich eine Kombination aus einer Schätzung mittels Entscheidungsbaum und einer Schätzung mittels Zustandsautomat als besonders vorteilhaft herausgestellt. Durch das Verfahren wird die Kombination eines mithilfe von maschinellem Lernen trainierten Entscheidungsbaums und einem auf menschlicher Erfahrung beim Schätzen des Straßentyps basierenden Zustandsautomaten ermöglicht. In dieser bevorzugten Ausgestaltung wird der Entscheidungsbaum mit an sich bekannten Verfahren des maschinellen Lernens induziert, aufbauend auf aufgezeichneten Fahrtdaten (Trainingsdaten), die sensorbasierte Umfelddaten umfassen und als Schätzergebnis des Straßentyps die durch ein Navigationssystem bestimmten Straßentypen. Mit anderen Worten: Durch das Training werden Umfelddaten mit Straßentypen assoziiert. Der Zustandsautomat umfasst in dieser Ausgestaltung Übergangsregeln zwischen Zuständen, die Straßentypen und gegebenenfalls den Zustand "keine Schätzung des Straßentyps möglich" repräsentieren, wobei die Übergangsregeln durch menschliche Beobachtung definiert werden. Mithilfe dieser Struktur der Schätzung werden besonders gute Schätzergebnisse erreicht. In einem Aufbau wurden beispielsweise Autobahnen mit einer Genauigkeit von über 90% erkannt.

Aufgrund der Unabhängigkeit der Straßentyperkennung von den Daten eines Navigationssystems ist es nicht erforderlich, das Navigationssystem und dessen gespeicherte digitale Karten zu aktualisieren. Die Aktualisierung der Karten kann Kosten und administrativen Aufwand verursachen, was durch vorliegend Erfindung vermieden werden kann. Die Laufzeitanforderungen zur Ausführung des Verfahrens sind im Vergleich zu den Anforderungen zur Bestimmung des Straßentyps anhand eines Navigationssystems mit gespeicherter digitaler Karte gering.

Umfelddaten können insbesondere direkte Messwerte von Sensoren sein, aufbereitete Messwerte, wie beispielsweise erkannte Objekte in einer Kameraaufnahme oder Radarabtastung. Generell beschreiben Umfelddaten Eigenschaften des Umfelds des Fahrzeugs. Als Sensoren kommen sämtliche Sensoren des Farhzeugs in Betracht, beispielsweise Kamerasysteme, 3D Kamerasysteme, seitliche Kameras, Rückfahrkameras, Ultraschall- und Lidarsensoren, Geschwindigkeitsmesser, Gierratensensoren oder Lenkwinkelsensoren. Ein Beispiel für Umfelddaten sind aufbereitete Daten aus einer Kameraaufnahme, die angeben, dass die Spurbreite 2,5 m ist, und dass es sich bei der Fahrbahn um eine Richtungsfahrbahn handelt.

Umfelddaten können Daten von mehreren Sensoren sein, die als Bündel beispielsweise in einem Vektor vorliegen. Ein Umfelddaten-Vektor kann beispielsweise die in einer Kameraaufnahme erkannte Spurbreite, die Anzahl der per Kameraaufnahme erkannten Schilder, mithilfe einer Kameraaufnahme oder Radarabtastung erkannter entgegenkommender Verkehr, erkannte Geschwindigkeitsbegrenzungen, eine mit einer seitlich am Fahrzeug angeordneten Kamera erkannte Straßenlampe, mit Ultraschallsensoren erkannte Hindernisse oder den Abstand zum Vorderfahrzeug, die mit Lidarsensoren erkannte Bremsschwelle und/oder die mit kapazitiven Sensoren erkannte Höhe des Fahrwerks umfassen.

Der Zustandsautomat kann auf menschlicher Erfahrung beim Schätzen des Straßentyps basieren. Diese Erfahrung kann in allen oder einigen Übergangsregeln zwischen den Zuständen festgehalten sein.

In einem Zustandsautomat repräsentieren die Zustände die Straßentypen (beispielsweise Innerorts, Landstraße und Autobahn) und den Zustand, dass keine Schätzung des Straßentyps möglich ist beziehungsweise gleichbedeutend, dass keine Bestimmung des Straßentyps möglich ist. Die Übergangsregeln basieren auf boolschen Ausdrücken, die Eingangsdaten, also Umfelddaten, miteinander verknüpfen. Ein Beispiel für eine Übergangsregel ist (Straßenbreite > 2,3m) && (Richtungsfahrbahn == Ja) -> "Autobahn".

Die gebildete Gesamtschätzung kann für eine bestimmte Fahrtstrecke des Fahrzeugs ausgegeben werden. Weiterhin kann vorgesehen sein, die Ausgabe der Schätzung abhängig von dem bestimmten Straßentyp zu gestalten beziehungsweise bei zu behalten. So kann vorgesehen sein, dass, wenn der Straßentyp "Innerorts" geschätzt wurde, diese Ausgabe für eine Fahrtstrecke des Fahrzeugs von 500 m beibehalten wird. Wenn der Straßentyp "Landstraße" geschätzt wurde, kann dieser Typ für 1000 m beibehalten werden. Wenn der Straßentyp "Autobahn" geschätzt wurde, kann diese Ausgabe für 2000 m beibehalten werden. Nach Ablauf dieser Haltestrecke kann eine erneute Gesamtschätzung ausgegeben werden. Während der Haltestrecke kann vorgesehen sein, bereits eine erneute Gesamtschätzung zu bilden, die dann nach Ablauf der Haltestrecke ausgegeben wird

In einer Weiterentwicklung umfasst das Bilden einer Gesamtschätzung das Setzen der Gesamtschätzung auf die Schätzung mithilfe des Zustandsautomaten, wenn die Schätzung mithilfe des Zustandsautomaten nicht ausgibt, dass kein Straßentyp bestimmt werden kann; Das Bilden einer Gesamtschätzung umfasst ferner das Setzen der Gesamtschätzung auf die Schätzung mithilfe des Entscheidungsbaumes, wenn die Schätzung mithilfe des Zustandsautomaten ausgibt, dass kein Straßentyp bestimmt werden kann. Dies ist insbesondere vorteilhaft im Fall eines durch Maschinenlernen induzierten Entscheidungsbaumes und einem auf menschlicher Erfahrung basierenden Zustandsautomaten. Solange der Straßentyp mithilfe des Zustandsautomaten bestimmt werden kann und damit mit auf menschlicher Erfahrung basierenden Regeln, wird dieser Schätzung des Straßentyps der Vorzug gegeben. In Fällen, in denen der Zustandsautomat jedoch keine Aussage liefern kann, wird auf den durch maschinellen Lernen induzierten Entscheidungsbaum zurückgegriffen, um eine Aussage bereitstellen zu können. Heutige und zukünftige Assistenzsysteme können Ihre Funktion anhand des Straßentyps verbessern beziehungsweise optimieren und sind auf eine fortlaufende Bereitstellung dieser Schätzung angewiesen. Die Funktion dieser Systeme wird somit sichergestellt. Darüber hinaus ist es möglich bestimmte Funktionen eines Assistenzsystems oder ganze Assistenzsysteme nur zu aktivieren, wenn sich das Fahrzeug auf einem bestimmten Straßentyp befindet. Gleichzeitig wird der Einsatz des gleichen Assistenzsystems in verschiedenen Fahrzeugen ermöglicht, unabhängig davon, ob das Fahrzeug über ein Navigationssystem und damit eine konstante Bereitstellung des Straßentyps verfügt oder nicht. Eine Kosten hervorrufende Anpassung des Assistenzsystems an Fahrzeuge mit oder ohne Navigationssystem wird damit vermieden. Weiterhin greift das Verfahren auf typischerweise bereits vorhandene Sensoren und Ressourcen oder deren Auswertungen zurück, was keine Zusatzkomponenten erforderlich macht. Wodurch wiederum Kosten gespart werden.

Auch eine Reduzierung des Kabelaufwandes, des Bauvolumens und des Programmieraufwandes ist durch das erfindungsgemäße Verfahren möglich. Weiterhin wird eine Fahrzeugkonfiguration flexibler, da für Fahrerassistenzfunktionen, die eine Schätzung beziehungsweise Bestimmung des Straßentyps benötigen, kein Navigationssystem hinzugewählt werden muss. Sowohl der Entscheidungsbaum als auch der Zustandsautomat können derart gewählt werden, dass die Anzahl der Umfelddaten, die für die Schätzung benötigt werden, minimiert wird. Auf diese Weise kann der Rechenaufwand verringert werden. Die Verringerung der Anzahl der Umfelddaten kann ebenfalls zu Einsparungen bei der Energieversorgung der Sensorsysteme führen, da nicht benötigte Sensoren und deren elektronische Rechensysteme abgeschaltet werden können. Für gewöhnlich arbeiten diese Sensorsysteme unabhängig voneinander und die Abschaltung eines Sensorsystems reduziert den Energieverbrauch entsprechend.

Ein Assistenzsystem kann eine Adaptive Cruise Control (ACC), ein Fernlichtassistent, eine Einparkhilfe, ein Wärmemanagement, ein Getriebemanagement oder ein Energiemanagement sein.

In einer Fortentwicklung basiert das Zuordnen eines Qualifizierungswertes zu der Gesamtschätzung darauf, ob die Gesamtschätzung auf der Schätzung mithilfe des Zustandsautomaten oder des Entscheidungsbaumes basiert. Mithilfe des Qualifizierungswertes wird Abnehmern der Gesamtschätzung (beispielsweise Assistenzsystemen) eine Bewertung der Zuverlässigkeit der Gesamtschätzung ermöglicht. So kann einer Gesamtschätzung, die darauf basiert, dass sowohl die Schätzung mithilfe des Zustandsautomaten, als auch die Schätzung mithilfe des Entscheidungsbaumes zum selben Ergebnis geführt hat, ein besserer (gegebenenfalls höherer) Qualifizierungswert zugeordnet werden, als wenn die Schätzung mithilfe des Entscheidungsbaumes die Schätzung mithilfe des Zustandsautomaten nicht bestätigt. Eine Gesamtschätzung, die nur auf der Schätzung mithilfe des Entscheidungsbaumes basiert, kann ein schlechterer (gegebenenfalls niedrigerer) Qualifizierungswert zugeordnet werden, als wenn die Gesamtschätzung zumindest auch auf einer Schätzung mithilfe des Zustandsautomaten basiert.

In einer weiteren Fortentwicklung umfasst das Verfahren das Empfangen eines Satzes von auf Sensormessungen basierenden Umfelddaten, wobei jedem Element des Satzes ein Zeitpunkt zugewiesen ist; Für jedes Element des Satzes: Erstellen einer Teilschätzung des Straßentyps mithilfe des Entscheidungsbaumes basierend auf dem jeweiligen Element des Satzes; Wobei das Zuordnen des Qualifizierungswertes auch auf der Anzahl der Teilschätzungen, die mit der Gesamtschätzung übereinstimmen, basiert. Dies kann insbesondere bedeuten, dass jedes empfangene Element jeweils auf (mindestens) einer Sensormessung basiert, die zu einem anderen Zeitpunkt ausgeführt wurde. Auf diese Weise wird ein größerer Bereich des Umfelds des Fahrzeugs erfasst und durch Aufteilung in Abtastungen für Teilschätzung mithilfe des Entscheidungsbaumes verwendet. Der Qualifizierungswert kann derart bestimmt werden, dass jede Teilschätzung mit demselben Ergebnis wie das Ergebnis der Schätzung mithilfe des Zustandsautomaten den Qualifizierungswert erhöht. Teilschätzungen mit einem anderen Ergebnis jedoch nicht.

In einer anderen Weiterentwicklung umfasst das Verfahren das Empfangen eines Satzes von auf Sensormessungen basierenden Umfelddaten, wobei jedem Element des Satzes ein Zeitpunkt zugewiesen ist; Wobei das Schätzen mithilfe des Entscheidungsbaumes umfasst: Für jedes Element des Satzes: Erstellen einer Teilschätzung des Straßentyps mithilfe des Entscheidungsbaumes basierend auf dem jeweiligen Element des Satzes; Schätzen des Straßentyps basierend auf den erstellten Teilschätzungen, insbesondere mithilfe eines Mehrheitsentscheids.

Ein Satz von Umfelddaten umfasst mindestens zwei separierte Umfelddaten. Im Fall von Umfelddaten-Vektoren umfasst ein Satz von Umfelddaten mindestens zwei Umfeld-Vektoren. Ein Element des Satzes ist ein einzelner Vektor. Typischerweise basiert jedes Element auf Sensordaten, die zu einem Zeitpunkt gemessen wurden.

Die Schätzung mithilfe des Entscheidungsbaumes basiert somit auf mehreren Teilschätzungen mithilfe des Entscheidungsbaumes, wobei jeweils Umfelddaten, denen ein anderer Zeitpunkt zugeordnet ist, verwendet werden. Dies kann insbesondere bedeuten, dass jedes empfangene Element jeweils auf (mindestens) einer Sensormessung basiert, die zu einem anderen Zeitpunkt oder an einer anderen Position des Fahrzeugs ausgeführt wurde. Auf diese Weise wird ein größerer Bereich des Umfelds des Fahrzeugs erfasst und für die Schätzung mithilfe des Entscheidungsbaumes berücksichtigt. Die Verlässlichkeit der Schätzung mithilfe des Entscheidungsbaumes wird so erhöht.

In einer Weiterentwicklung umfasst das Verfahren das Bestimmen eines Funktionsparameters eines Sensors anhand der Gesamtschätzung des Straßentyps, insbesondere die Stärke der Stromversorgung oder die Deaktivierung der Stromversorgung. Auf diese Weise kann die Funktion der Sensoren an die Situation des Straßentyps angepasst werden, was einerseits die Performanz der Sensoren erhöhen kann und gleichzeitig andererseits Energie sparen kann. In Situationen, in denen keine Sensoreingaben benötigt werden, kann der Sensor so in einen Modus mit niedrigerem Energieverbrauch verbracht werden. Die Reichweite von Ultraschallsensoren beispielsweise hängt von der bereitgestellten Höhe der Energie-/Stromversorgung ab. In Fällen, in denen Hindernisse in kurzen Distanzen zu detektieren sind (beim Parken Innerorts zum Beispiel), können diese deshalb mit einer geringeren Stromzufuhr arbeiten, als in Fällen, in denen Hindernisse in größeren Distanzen zu detektieren sind (bei der Detektion anderer Verkehrsteilnehmer auf der Autobahn beispielsweise).

In einem anderen Aspekt ist eine Vorrichtung mit elektronischer Recheneinheit und Empfangseinheit für Umfelddaten dazu eingerichtet, eines der oben vorgestellten Verfahren auszuführen. Bei dieser Vorrichtung kann es sich um einen Mikroprozessor, einen Universalcomputer oder dedizierte Schaltkreise handeln. Die Vorrichtung kann durch Programmcode zur Ausführung des Verfahrens eingerichtet sein. Die Empfangseinheit für Umfelddaten kann eine Standardschnittstelle wie USB, CAN, Ethernet, Wi-Fi oder Firewire sein.

### KURZE BESCHREIBUNG DER ZEICHNUNGEN

Fig. 1 zeigt schematisch den Aufbau eines Systems gemäß einem Ausführungsbeispiel.
Fig. 2 zeigt schematisch den Aufbau einer Vorrichtung zur Schätzung des Straßentyps gemäß einem Ausführungsbeispiel.
Fig. 3 zeigt schematisch die Erzeugung eines Entscheidungsbaumes und den Entscheidungsbaum gemäß einem Ausführungsbeispiel.
Fig. 4 zeigt schematisch einen Zustandsautomaten gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

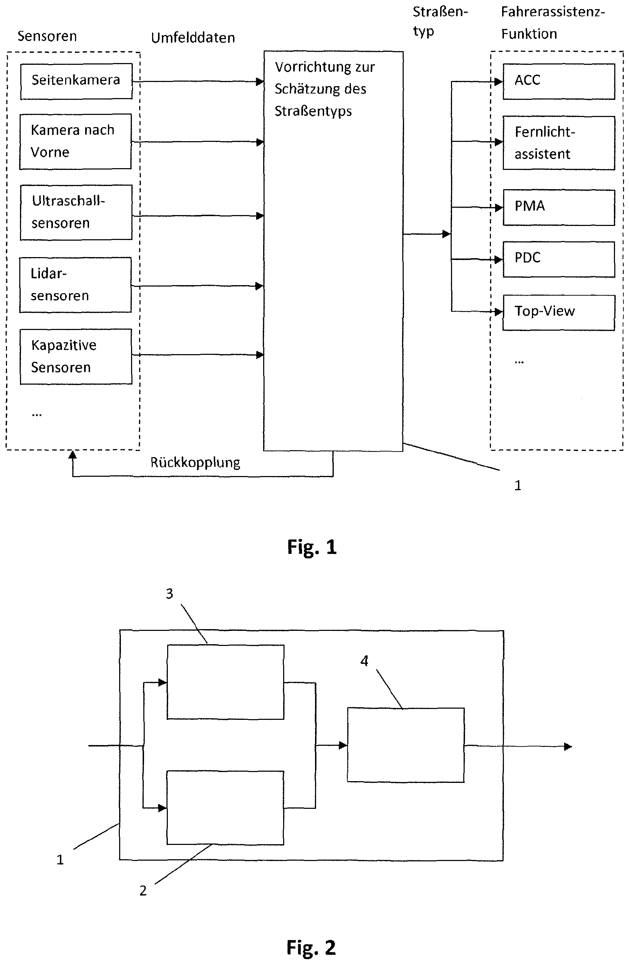

Fig. 1 zeigt schematisch den Aufbau eines Systems gemäß einem Ausführungsbeispiel. Sensoren eines Fahrzeugs, wie eine seitliche Kamera, eine nach vorne gerichtete Kamera, Ultraschallsensoren, Lidarsensoren und kapazitive Sensoren des Fahrwerks liefern an eine Vorrichtung 1 zur Schätzung des Straßentyps Umfelddaten. Diese Umfelddaten können sein: von der seitlichen Kamera erkannte Straßenlampen, durch die nach vorne gerichtete Kamera erkannter Gegenverkehr auf der Fahrbahn, durch die nach vorne gerichtete Kamera erkannte Verkehrsschilder, eine durch die nach vorne gerichtete Kamera erkannte Geschwindigkeitsbegrenzung, durch die Ultraschallsensoren erkannte Hindernisse auf der Fahrbahn, ein durch die Ultraschallsensoren erkannter Abstand zu einem vorausfahrenden Fahrzeug, eine durch die Lidarsensoren erkannte Bremsschwelle, eine durch die kapazitiven Sensoren erkannte Höhe eines Fahrwerks. Die Vorrichtung 1 zur Schätzung der Umfelddaten schätzt auf der Basis der Umfelddaten den Straßentyp, wofür eine von der Vorrichtung 1 umfasste elektronische Recheneinheit zum Einsatz kommt. Der geschätzte Straßentyp wird verschiedenen Fahrerassistenzfunktionen zur Verfügung gestellt. Beispielsweise einer Automatic Cruise Control (ACC), einem Fernlichtassistent, einer Park Manöver Assistenz (PMA), einer Park Distance Control (PDC) und einer aufbereiteten Sicht des Fahrzeugs von oben, basierend auf mehreren Kameras des Fahrzeugs (Top-View). Weiterhin wird der geschätzte Straßentyp den Sensoren beziehungsweise Sensorsystemen zur Verfügung gestellt, die entsprechend dem geschätzten Typ deaktiviert werden können, um Energie zu sparen.

Fig. 2 zeigt schematisch den Aufbau einer Vorrichtung 1 zur Schätzung des Straßentyps gemäß einem Ausführungsbeispiel. Die Vorrichtung empfängt Umfelddaten und gibt diese sowohl an Mittel 2 zur Schätzung des Straßentyps mittels eines Entscheidungsbaumes, als auch an Mittel 3 zur Schätzung des Straßentyps mittels eines Zustandsautomaten weiter. Beide Mittel 2 und 3 liefern eine Schätzung des Straßentyps (gegebenenfalls liefern die Mittel 3 die Ausgabe "keine Schätzung des Straßentyps möglich") an Mittel 4 zur Bildung einer Gesamtschätzung. Diese Mittel 4 bilden eine Gesamtschätzung basierend auf den Ausgaben der Mittel 2 und 3. Dabei ist vorgesehen, dass solange die Schätzung mithilfe des Zustandsautomaten einen Straßentyp ausgibt und nicht die Ausgabe "keine Schätzung des Straßentyps möglich" ausgibt, diese Schätzung des Zustandsautomaten die Gesamtschätzung bildet. Falls die Schätzung mithilfe des Zustandsautomaten die Ausgabe ergibt, dass keine Schätzung des Straßentyps möglich ist, wird die Schätzung mithilfe des Entscheidungsbaumes als Gesamtschätzung bereitgestellt. Die Gesamtschätzung wird von der Vorrichtung 1 ausgegeben. Die Mittel 2, 3 und 4 können sowohl in Hardware als auch in Software ausgeführt sein. Die Mittel 2 und 3 müssen nicht gleichzeitig die Schätzung vornehmen sondern können sie auch nacheinander vornehmen.

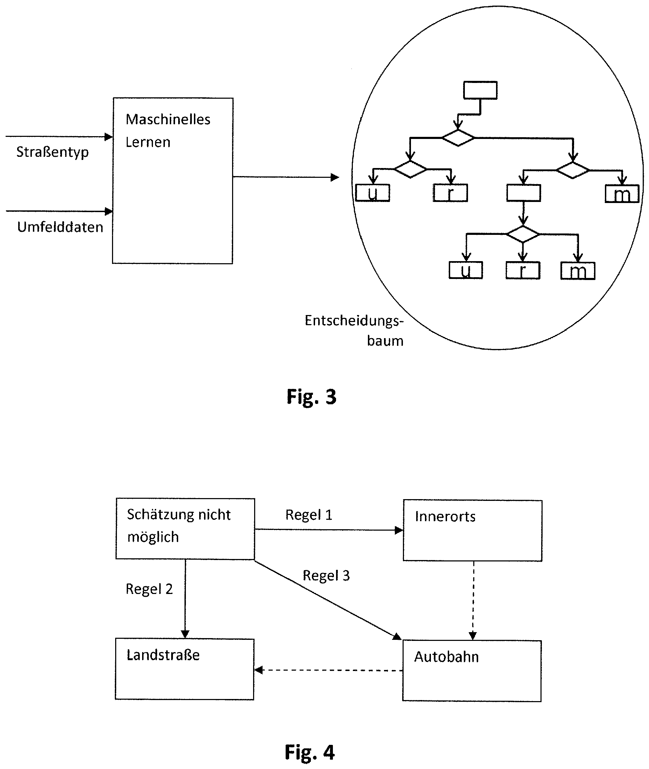

Fig. 3 zeigt schematisch die Erzeugung eines Entscheidungsbaumes und den Entscheidungsbaum. Der Algorithmus zur Induktion des Entscheidungsbaumes erhält als Trainingsdaten die während einer Fahrt aufgezeichneten Vektoren von Umfelddaten und den gleichzeig zu jedem Vektor bestimmten Straßentyp, der über ein Navigationssystem mit einer den Straßentyp speichernden digitalen Karte bestimmt wird. Algorithmen zur Erstellung beziehungsweise Induktion des Entscheidungsbaumes sind im Stand der Technik bekannt. Falls die in der digitalen Karten gespeicherten Straßentypen feiner klassifiziert sind, als die Klassifikation, die der Entscheidungsbaum liefern soll, müssen in der Karte gespeicherte Straßentypen zu einem Straßentyp für den Entscheidungsbaum zusammengefasst werden. In der Fig. 3 bezeichnet der Buchstabe "u" die Schätzung "Innerorts" (urban), der Buchstabe "r" die Schätzung "Landstraße" (rural) und der Buchstabe "m" die Schätzung "Autobahn" (motorway). Der Umfelddaten-Vektor kann eine erkannte Geschwindigkeitsbegrenzung, eine erkannte Spurbreite, ein erkanntes Überholverbot, die Anzahl der Schilder links/rechts/insgesamt, links oder rechts erkannte Objekte umfassen.

In der Vorrichtung 1 zur Schätzung des Straßentyps wird der erzeugte Entscheidungsbaum beispielsweise in den Quellcode einer Applikation beziehungsweise eines Programms integriert und wird Hilfe eines Compilers in Maschinensprache/Objektcode übersetzt. Bei der Auswertung eines Entscheidungsbaumes werden die Eingangsumfelddaten (der Inputvektor) durch das generierte "if-then-else"-Konstrukt top-down propagiert. Dieser baumartige Aufbau enthält in jedem Knoten eine (Schwellwert-)Abfrage, die sich auf einen Wert des Eingabevektors beziehungsweise Umfelddaten-Vektors bezieht. In den Blättern befinden sich jeweils die Ergebnisse eines solchen Abfragepfades, die gleichzeitig einer der zu klassifizierenden Klassen entsprechen, also der Schätzung des Straßentyps. Der Speicherbedarf eines Entscheidungsbaumes als Objektcode setzt sich zum Einen aus den einzelnen Vergleichsbefehlen zusammen (Registerlade- und Vergleichsoperatoren, bzw. Sprungoperatoren, üblicherweise jeweils 32 Bit). Zum Anderen belegen die Schwellwerte, mit denen die Eingangsdaten verglichen werden, entsprechend ihrer Auflösung unterschiedlich viel Platz. Die erste Möglichkeit zur Speicherplatzoptimierung bietet die Abbildung bestimmter kontinuierlicher (analoger) Werte auf das diskrete Intervall 0-255, falls der Verlust an Genauigkeit für die Applikation vertretbar ist. Bei sehr großen Entscheidungsbäumen bietet die Definition einer angepassten Sprache und die Umsetzung eines entsprechenden Parsers eine weitere Möglichkeit zur Speicherplatzreduktion. Dabei wird ein reduziertes und angepasstes Alphabet von Operatoren und Operanden definiert, das speziell für den Entscheidungsbaum entworfen wurde. Ein Abfrageknoten kann somit in den meisten Fällen auf wenige Bytes reduziert werden. Der Speicherverbrauch an nicht wahlfrei beschreibbarem Speicher (ROM) eines Entscheidungsbaumes konnte auf diese Weise auf unter 8 KB reduziert werden bei einem allgemeinen Overhead von unter 7 KB. Der Bedarf an RAM war vernachlässigbar. Auch ist es möglich einen eigenen Entscheidungsbaum für ein bestimmtes Land oder eine bestimmte Region vorzusehen. Auch ist es möglich für jede Assistenzfunktion einen eigenen Entscheidungsbaum vorzusehen.

Fig. 4 zeigt schematisch einen Zustandsautomaten gemäß einem Ausführungsbeispiel. Dargestellt sind die vier Zustände Innerorts, Landstraße und Autobahn sowie der Zustand, dass keine Schätzung möglich ist. Aus diesem Zustand kann mithilfe von drei Regeln in andere Zustände übergegangen werden.

Regel 1 definiert, dass bei empfangenen Umfelddaten, die anzeigen, dass ein Schild erkannt wurde, dass einen beruhigten Verkehrsbereich (Spielstraße) anzeigt, in den Zustand "Innerorts" übergegangen wird. Da in diesem Fall der Zustandsautomat eine Schätzung liefert, die von dem Zustand, der anzeigt, dass keine Schätzung möglich ist, abweicht, wird durch die Vorrichtung 1 zur Schätzung des Straßentyps die Schätzung des Zustandsautomaten ("Innerorts") ausgegeben. Diese Schätzung wird für 500m ausgegeben, da der erkannte Straßentyp "Innerorts" ist.

Regel 2 definiert, dass bei empfangenen Umfelddaten, die anzeigen, dass ein Schild erkannt wurde, dass einen Ortsausgang anzeigt, in den Zustand "Landstraße" übergegangen wird. Da in diesem Fall der Zustandsautomat eine Schätzung liefert, die von dem Zustand, der anzeigt, dass keine Schätzung möglich ist, abweicht, wird durch die Vorrichtung 1 zur Schätzung des Straßentyps die Schätzung des Zustandsautomaten ("Landstraße") ausgegeben. Diese Schätzung wird für 1000m ausgegeben, da der erkannte Straßentyp "Landstraße" ist.

Regel 3 definiert, dass bei empfangenen Umfelddaten, die anzeigen, dass das Fahrzeug für 5 Minuten schneller als 120 km/h gefahren ist, in den Zustand "Autobahn" übergegangen wird. Da in diesem Fall der Zustandsautomat eine Schätzung liefert, die von dem Zustand, der anzeigt, dass keine Schätzung möglich ist, abweicht, wird durch die Vorrichtung 1 zur Schätzung des Straßentyps die Schätzung des Zustandsautomaten ("Autobahn") ausgegeben. Diese Schätzung wird für 2000m ausgegeben, da der erkannte Straßentyp "Autobahn" ist.

Der Zustandsautomat konnte mit einem Speicherverbrauch an nicht wahlfrei beschreibbarem Speicher (ROM) von unter 3 KB realisiert werden bei einem allgemeinen Overhead von unter 7 KB. Der Bedarf an RAM war vernachlässigbar. Auch ist es möglich einen eigenen Zustandsautomaten für ein bestimmtes Land oder eine bestimmte Region vorzusehen. Auch ist es möglich für jede Assistenzfunktion einen eigenen Zustandsautomaten vorzusehen.

Der Ausgabe der Vorrichtung 1 zur Schätzung des Straßentyps kann ein Qualifizierungswert zugeordnet werden. Dieser Qualifizierungswert ist abhängig von den Schätzungen mithilfe des Entscheidungsbaumes oder des Zustandsautomaten gestaltet. Gleichzeitig wird für diesen Qualifizierungswert, die Schätzung mithilfe des Entscheidungsbaumes dreimal (beziehungsweise mehrmals) durchgeführt, jeweils mit anderen Umfelddaten-Vektoren, die Sensormessungen zu verschiedenen Zeiten oder Positionen des Fahrzeugs, repräsentieren. Die mehreren Schätzungen mithilfe des Entscheidungsbaumes können durchgeführt werden während nur eine Schätzung mithilfe des Zustandsautomaten durchgeführt wird. Der Qualifizierungswert wird dann wie folgt gebildet, wobei ein höherer Qualifizierungswert auf eine bessere Gesamtschätzung hindeutet: Wert 5, falls die Schätzung mithilfe des Zustandsautomaten durch mindestens zwei Schätzungen mithilfe des Entscheidungsbaumes bestätigt wird; Wert 4, falls die Schätzung mithilfe des Zustandsautomaten durch eine Schätzung mithilfe des Entscheidungsbaumes bestätigt wird; Wert 3, falls die Schätzung mithilfe des Zustandsautomaten durch keine Schätzung mithilfe des Entscheidungsbaumes bestätigt wird; Wert 2, falls der Zustandsautomaten ausgibt, dass keine Schätzung möglich ist und drei Schätzungen mithilfe des Entscheidungsbaumes dieselbe Schätzung ausgeben (die auch als Gesamtschätzung ausgegeben wird); Wert 1, falls der Zustandsautomaten ausgibt, dass keine Schätzung möglich ist und zwei Schätzungen mithilfe des Entscheidungsbaumes dieselbe Schätzung ausgeben (die auch als Gesamtschätzung ausgegeben wird).

## Patentansprüche

1. Verfahren zum Schätzen eines Straßentyps, das durch eine elektronische Rechenvorrichtung ausgeführt wird, umfassend:
Empfangen von auf einer Sensormessung basierenden Umfelddaten;
Schätzen des Straßentyps mithilfe eines Entscheidungsbaumes (2) basierend auf den Umfelddaten
Das Verfahren **gekennzeichnet, durch** ferner umfassend:
Schätzen des Straßentyps mithilfe eines Zustandsautomaten (3) basierend auf den Umfelddaten;
Bilden einer Gesamtschätzung des Straßentyps basierend auf der Schätzung mithilfe des Entscheidungsbaumes und der Schätzung mithilfe des Zustandsautomaten;
wobei der Entscheidungsbaum durch maschinelles Lernen induziert wird;
wobei die Schätzung des Straßentyps mithilfe des Zustandsautomaten auch die Ausgabe umfasst, dass kein Straßentyp bestimmt werden kann; wobei:
Das Bilden einer Gesamtschätzung umfasst das Setzen der Gesamtschätzung auf die Schätzung mithilfe des Zustandsautomaten, wenn die Schätzung mithilfe des Zustandsautomaten nicht ausgibt, dass kein Straßentyp bestimmt werden kann;
Das Bilden einer Gesamtschätzung umfasst ferner das Setzen der Gesamtschätzung auf die Schätzung mithilfe des Entscheidungsbaumes, wenn die Schätzung mithilfe des Zustandsautomaten ausgibt, dass kein Straßentyp bestimmt werden kann.

2. Verfahren nach Anspruch 1, ferner umfassend:
Zuordnen eines Qualifizierungswertes zu der Gesamtschätzung, basierend darauf, ob die Gesamtschätzung auf der Schätzung mithilfe des Zustandsautomaten oder des Entscheidungsbaumes basiert.

3. Verfahren nach Anspruch 2, ferner umfassend:
Empfangen eines Satzes von auf Sensormessungen basierenden Umfelddaten, wobei jedem Element des Satzes ein Zeitpunkt zugewiesen ist;
Für jedes Element des Satzes: Erstellen einer Teilschätzung des Straßentyps mithilfe des Entscheidungsbaumes basierend auf dem jeweiligen Element des Satzes;
Wobei das Zuordnen des Qualifizierungswertes auch auf der Anzahl der Teilschätzungen, die mit der Gesamtschätzung übereinstimmen, basiert.

4. Verfahren nach einem der vorhergehenden Ansprüche, ferner umfassend:
Empfangen eines Satzes von auf Sensormessungen basierenden Umfelddaten, wobei jedem Element des Satzes ein Zeitpunkt zugewiesen ist;
Wobei das Schätzen mithilfe des Entscheidungsbaumes umfasst:
Für jedes Element des Satzes: Erstellen einer Teilschätzung des Straßentyps mithilfe des Entscheidungsbaumes basierend auf dem jeweiligen Element des Satzes;
Schätzen des Straßentyps basierend auf den erstellten Teilschätzungen, insbesondere mithilfe eines Mehrheitsentscheids.

5. Verfahren nach einem der vorhergehenden Ansprüche, wobei der Entscheidungsbaum durch maschinelles Lernen mit Trainingsdaten induziert wird, die als Entscheidungsergebnis die Bestimmung des Straßentyps mithilfe eines Satellitennavigationssystems und einer digitalen Karte vorgeben.

6. Verfahren nach einem der vorhergehenden Ansprüche, ferner umfassend:
Bestimmen eines Funktionsparameters eines Sensors anhand der Gesamtschätzung des Straßentyps, insbesondere die Stärke der Stromversorgung oder die Deaktivierung der Stromversorgung.

7. Vorrichtung mit elektronischer Recheneinheit und Empfangseinheit für Umfelddaten, die dazu eingerichtet ist ein Verfahren nach einem der Ansprüche 1 bis 6 auszuführen.

8. Fahrzeug, umfassend eine Vorrichtung nach Anspruch 7.

## Claims

1. Method for assessing a road type, which is carried out by an electronic computing apparatus, comprising:
receiving environment data that are based on a sensor measurement;
assessing the road type using a decision tree (2) based on the environment data;
the method being **characterized in that** it also comprises:
assessing the road type using a state machine (3) based on the environment data;
forming an overall assessment of the road type based on the assessment using the decision tree and the assessment using the state machine;
wherein the decision tree is induced by machine learning;
wherein the assessment of the road type using the state machine also comprises the output that a road type cannot be determined;
wherein
the forming of an overall assessment comprises setting the overall assessment to the assessment using the state machine when the assessment using the state machine does not output that a road type cannot be determined;
the forming of an overall assessment additionally comprises setting the overall assessment to the assessment using the decision tree when the assessment using the state machine outputs that a road type cannot be determined.

2. Method according to Claim 1, also comprising:
allocating a qualification value to the overall assessment, based on whether the overall assessment is based on the assessment using the state machine or the decision tree.

3. Method according to Claim 2, also comprising:
receiving a set of environment data that are based on sensor measurements, wherein each element of the set has an assigned instant;
for each element of the set: creating a partial assessment of the road type using the decision tree based on the respective element of the set;
wherein the allocating of the qualification value is also based on the number of partial assessments that match the overall assessment.

4. Method according to one of the preceding claims, also comprising:
receiving a set of environment data that are based on sensor measurements, wherein each element of the set has an assigned instant;
wherein the assessing using the decision tree comprises:
for each element of the set: creating a partial assessment of the road type using the decision tree based on the respective element of the set;
assessing the road type based on the created partial assessments, in particular using a majority decision.

5. Method according to one of the preceding claims, wherein the decision tree is induced by machine learning with training data that, as a decision result, prescribe the determination of the road type using a satellite navigation system and a digital map.

6. Method according to one of the preceding claims, also comprising:
determining a function parameter of a sensor on the basis of the overall assessment of the road type, in particular the intensity of the power supply or the deactivation of the power supply.

7. Apparatus having an electronic computing unit and a receiving unit for environment data, which is set up to carry out a method according to one of Claims 1 to 6.

8. Vehicle comprising an apparatus according to Claim 7.

## Revendications

1. Procédé d'estimation d'un type de route, ledit procédé étant mis en œuvre par un dispositif de calcul électronique et comprenant les étapes suivantes :
recevoir des données d'environnement basées sur une mesure de capteur ;
estimer le type de route à l'aide d'un arbre de décision (2) sur la base des données d'environnement,
le procédé étant **caractérisé en ce qu'**il comprend en outre les étapes suivantes :
estimer le type de route à l'aide d'un automate d'états (3) sur la base des données d'environnement ;
former une estimation globale du type de route sur la base de l'estimation à l'aide de l'arbre de décision et de l'estimation à l'aide de l'automate d'états ;
l'arbre de décision étant induit par apprentissage par machine ;
l'estimation du type de route à l'aide de l'automate d'états comprenant également l'indication selon laquelle aucun type de route ne peut être déterminé ;
la formation d'une estimation globale comprenant l'établissement de l'estimation globale sur la base de l'estimation à l'aide de l'automate d'états si l'estimation à l'aide de l'automate d'états n'indique pas qu'aucun type de route ne peut être déterminé ;
la formation d'une estimation globale comprenant en outre l'établissement de l'estimation globale sur la base de l'estimation à l'aide de l'arbre de décision si l'estimation à l'aide de l'automate d'états indique qu'aucun type de route ne peut être déterminé.

2. Procédé selon la revendication 1, comprenant en outre l'étape suivante :
associer une valeur de qualification à l'estimation globale sur la base du fait que l'estimation globale est basée sur l'estimation à l'aide de l'automate d'états ou de l'arbre de décision.

3. Procédé selon la revendication 2, comprenant en outre les étapes suivantes :
recevoir un ensemble de données d'environnement sur la base de mesures de capteurs, chaque élément de l'ensemble étant affecté à un instant ;
pour chaque élément de l'ensemble : établir une estimation partielle du type de route à l'aide de l'arbre de décision sur la base de l'élément respectif de l'ensemble ;
l'association de la valeur de qualification étant également basée sur le nombre d'estimations partielles qui correspondent à l'estimation totale.

4. Procédé selon l'une des revendications précédentes, comprenant en outre l'étape suivante :
recevoir un ensemble de données d'environnement sur la base de mesures de capteurs, chaque élément de l'ensemble étant affecté à un instant ;
l'estimation à l'aide de l'arbre de décision comprenant l'étape suivante :
pour chaque élément de l'ensemble : établir une estimation partielle du type de route à l'aide de l'arbre de décision sur la base de l'élément respectif de l'ensemble ;
estimer le type de route sur la base des estimations partielles établies, notamment à l'aide d'une décision majoritaire.

5. Procédé selon l'une des revendications précédentes, l'arbre de décision étant induit par apprentissage par machine avec des données d'apprentissage qui spécifient, comme résultat de décision, la détermination du type de route à l'aide d'un système de navigation par satellite et d'une carte numérique.

6. Procédé selon l'une des revendications précédentes, comprenant en outre l'étape suivante :
déterminer un paramètre fonctionnel d'un capteur sur la base de l'estimation globale du type de route, notamment l'intensité de l'alimentation électrique ou la désactivation de l'alimentation électrique.

7. Dispositif comprenant une unité de calcul électronique et une unité de réception de données d'environnement, le dispositif étant conçu pour mettre en œuvre un procédé selon l'une des revendications 1 à 6.

8. Véhicule comprenant un dispositif selon la revendication 7.
